# EUROPÄISCHE PATENTSCHRIFT

(11) **EP 1 420 178 B1**
(45) Veröffentlichungstag und Bekanntmachung des Hinweises auf die Patenterteilung: **08.02.2006**
(21) Anmeldenummer: 03026094.7
(22) Anmeldetag: 13.11.2003
(51) Int. Cl.: F16C 11/06

(54) **Kugelzapfenseitige Abdichtung eines Kugelgelenks**
Sealing of a ball joint on the side of its spherical gudgeon
Joint d'une articulation à rotule chez le côté du pivot sphérique

(30) Priorität: 14.11.2002 DE 20217685 U
(43) Veröffentlichungstag der Anmeldung: 19.05.2004
(73) Patentinhaber: Sachsenring Zwickau AG, 08058 Zwickau (DE)
(72) Erfinder: Dietrich, Swen Dipl.Ing, 08304 Schönheide (DE); Wackes, Ulrich Dipl.Ing, 08115 Lichtentanne (DE); Voy, Christian Prof Dr., 29549 Bad Bevensen OT Gollern (DE); Lange, Jürgen Dr., 08350 Ruppertsgrün (DE); Lange, Dirk, 08060 Zwickau (DE)
(74) Vertreter: Rumrich, Gabriele

(56) Entgegenhaltungen:
- DE-A1- 19 950 281
- GB-A- 1 077 149
- US-A- 2 397 464
- US-A- 3 387 870
- US-A- 4 220 418

## Beschreibung

Die Erfindung betrifft eine kugelzapfenseitige Abdichtung eines Kugelgelenks nach dem Oberbegriff des ersten Schutzanspruchs.

Es sind zahlreiche Kugelgelenke bekannt, welche ein mit einem Hohlraum versehenes Gehäuse aufweisen, in dem die Kugel eines Kugelzapfens in einer Lagerschale beweglich gelagert ist (DE 197 55 248 A1, DE 197 50 830 A1, DE 196 25 351 C1). Die Abdichtung erfolgt sowohl gehäuseseitig als auch kugelzapfenseitig über einen Dichtungsbalg. Der Dichtungsbalg wird dabei am Gehäuse und am Außendurchmesser des Zapfens meist über Sicherungsringe befestigt. Bei der Verbindung zwischen Dichtungsbalg und Kugelzapfen sind oftmals Undichtheiten zu verzeichnen, die zu einer Verschmutzung des Kugelgelenks und somit zu erhöhtem Verschleiß und zum Ausfall führen können. Eine dabei bereits verbesserte Abdichtvariante zwischen Kugelzapfen und Dichtungsbalg wird in DE 197 47 931 C1 beschrieben. Dabei weist der Kugelzapfen einen Ringkragen auf, durch den ein Hinterschnitt gebildet wird, in welchen der Dichtungsbalg unter axialer Vorspannung eingesetzt wird. Der Dichtungsbalg wird über Spannringe radial gegen seine Anlagebereiche gepresst. In einer Hohlkehle des Zapfens ist zusätzlich ein Abstandshalter angeordnet, der ein axiales Verschieben des Dichtungsbalges in Richtung Kugel verhindern soll. Diese Lösung ist relativ aufwendig und nicht einfach montierbar.

Aufgabe der Erfindung ist es, eine einfache und zuverlässige Abdichtung zwischen einem Dichtungsbalg und dem Kugelzapfen zu schaffen.

Die kugelzapfenseitige Abdichtung für ein Kugelgelenk, welches ein Gehäuse zur Aufnahme einer beweglich gelagerten Kugel eines Kugelzapfens sowie einen am Gehäuse und am Kugelzapfen abdichtenden Dichtungsbalg aufweist, dessen erster Dichtungsbalgrand an dem Schaft des Kugelzapfens und dessen zweiter Dichtungsbalgrand an dem Gehäuse angrenzt, ist erfindungsgemäß der an dem Schaft des Kugelzapfens abdichtende erste Dichtungsbalgrand an seinem nach oben offenen Ende mit einem radial umlaufenden, nach außen gerichteten Schenkel versehen, der an seiner, der Kugel abgewandten Seite an einer, auf dem Schaft sitzenden Scheibe anliegt, wobei die Scheibe und der erste Dichtungsbalgrand mittels eines im Querschnitt U-förmigen Profilringes miteinander verbunden sind.

Der Schenkel des ersten Dichtungsbalgrandes und die Scheibe sind dabei vorteilhaft zumindest teilweise innerhalb einer umlaufenden, nach innen geöffneten Mulde des Profilringes angeordnet, die durch zwei nach innen gerichtete radial umlaufende Schenkel und einen beide verbindenden Axialschenkel des Profilringes gebildet wird. Die Scheibe kann dabei mit ihrer in Richtung zur Kugel weisenden Seite an einem Anschlag des Schaftes des Kugelzapfens anliegen.

Der am Schenkel des ersten Dichtungsbalgrandes anliegende Schenkel und/oder der an der Scheibe anliegende Schenkel des Profilringes ist vorzugsweise ein durch Einrollen umgeformter Rollrand.

Die Scheibe und/oder das Profilelement bestehen insbesondere aus nichtrostendem Stahl.

Die Erfindung wird nachstehend an Ausführungsbeispielen näher erläutert.

Es zeigen:
Fig. 1: Kugelgelenk mit Profilring P, dessen an der Scheibe S anliegender Schenkel P2 eingerollt wird, vor dem Einrollen,
Fig. 2: Kugelgelenk gem. Fig. 1, nach dem Einrollen des Schenkels P2,
Fig. 3: Kugelgelenk mit Profilring P, dessen am Flansch des Dichtungsbalges anliegender Schenkel P1 eingerollt wird, vor dem Einrollen,
Fig. 4: Kugelgelenk gem. Fig. 1, nach dem Einrollen des Schenkels P1.

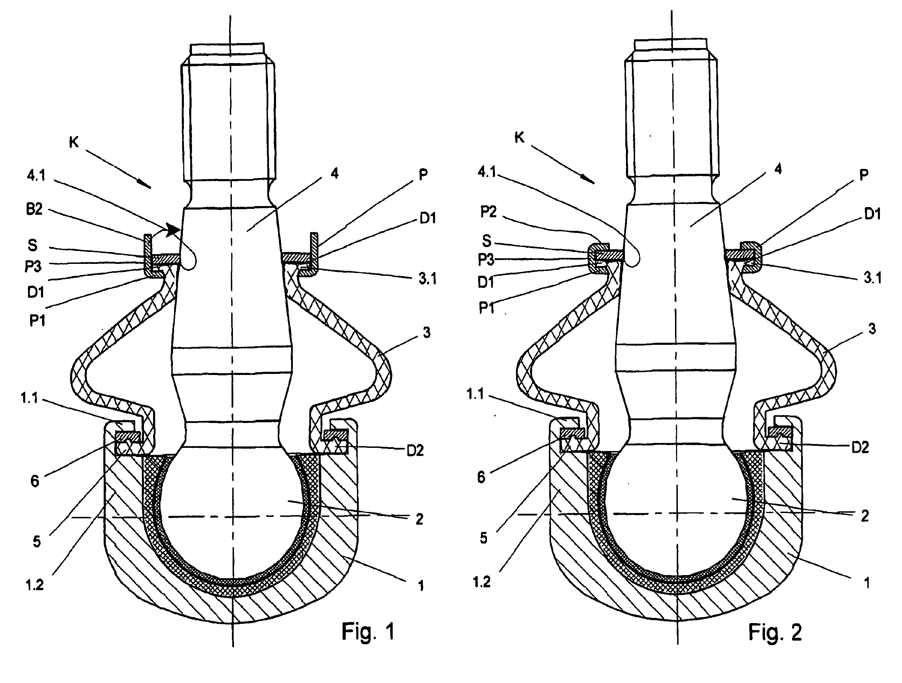

Figur 1 bis 4 zeigen in schematischer Darstellung ein Kugelgelenk mit einem zu einem Kugelzapfen K hin offenen Gehäuse 1 zur Aufnahme einer beweglich gelagerten Kugel 2 des Kugelzapfens K. Zwischen dem Gehäuse 1 und dem Kugelzapfen K ist ein Dichtungsbalg 3 angeordnet, dessen Dichtungsbalgrand D1 an dem Schaft 4 des Kugelzapfens K abdichtend anliegt. Der zweite Dichtungsbalgrand D2 ist mit dem Gehäuse 1 dieses abdichtend verbunden.

Der an dem Schaft 4 des Kugelzapfens K abdichtende erste Dichtungsbalgrand D1 weist dabei an seinem nach oben offenen Ende einen radial umlaufenden, nach außen gerichteten Schenkel 3.1 auf, der an seiner, der Kugel 2 abgewandten Seite an einer, auf dem Schaft 4 sitzenden Scheibe S anliegt. Fig. 1 zeigt dabei ein Kugelgelenk mit Profilring P, dessen gem. Fig. 2 an der Scheibe S anliegender Schenkel P2 eingerollt wird, vor dem Einrollen.

Die Scheibe S liegt dabei mit ihrer in Richtung zur Kugel 2 weisenden Seite an einem Anschlag 4.1 des Schaftes 4 des Kugelzapfens K an, wobei der Anschlag 4.1 als umlaufende Kante ausgebildet ist. Der Profilring P liegt mit seinem nach innen gerichteten ersten Schenkel P1 am Schenkel 3.1 des ersten Dichtungsbalgrandes D1 an. An dem nach innen gerichteten radial umlaufenden Schenkel P1 des Profilringes P schließt sich der Axialschenkel P3 und an diesen ein noch parallel zur Achse A des Kugelzapfens K verlaufender Bereich B2 des Profilringes P an. Dieser Bereich B2 des Profilringes P wird in Richtung zum Schaft 4 des Kugelzapfens K (Pfeilrichtung) über die Scheiben S greifend eingerollt und bildet nun gem. Fig. 2 den zweiten nach innen gerichteten radial umlaufenden Schenkel P2 des Profilringes P.

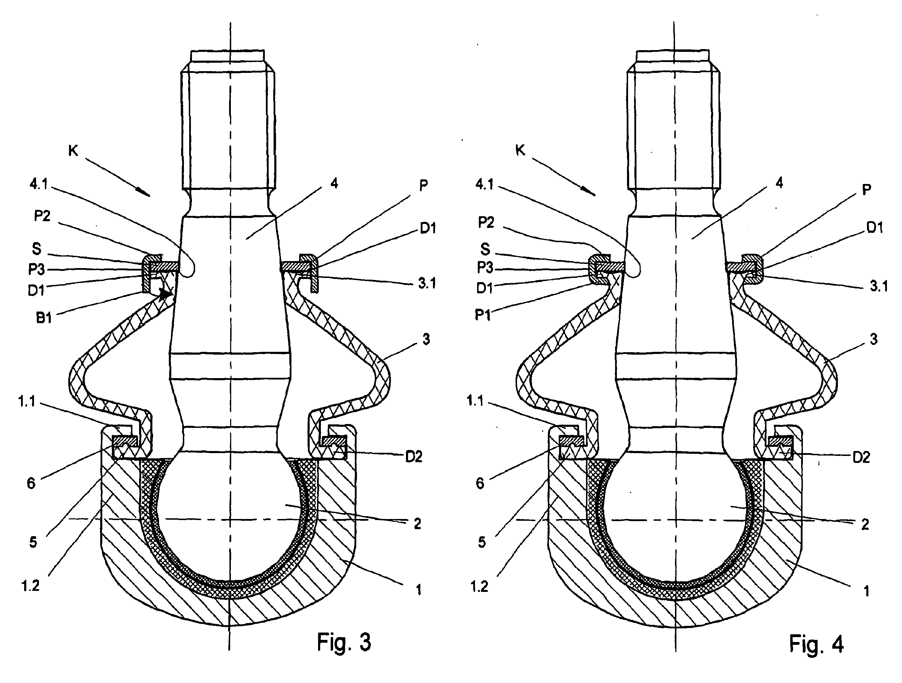

In äquivalenter Weise kann auch der zweite Schenkel P2 bereits nach innen gebogen sein und der nach dem Einrollen den ersten Schenkel P1 bildende Bereich B1 des Profilringes P die Scheibe S und den radial umlaufenden, nach außen gerichteten Schenkel 3.1 des ersten Dichtbereiches D1 des Dichtungsbalges 3 in Richtung zum Gehäuse 1 überragen. Dieser Bereich B1 wird anschließend in Pfeilrichtung, den Schenkel 3.1 übergreifend, eingerollt und es ergibt sich gem. Fig. 4 die Befestigung des ersten Dichtbereiches D1 am Schaft 4 des Kugelzapfens, welche der bereits in Fig. 2 dargestellten entspricht.

Durch das Einrollen der Schenkel P1 und/oder P2 wird eine äußerst einfache und gleichzeitig sichere Befestigung des ersten Dichtbereiches am Schaft 4 des Kugelzapfens K geschaffen.

In den dargestellten Ausführungsforrnen wurde auch der Dichtbereich D2 am Gehäuse 1 durch Einrollen eines Rollrandes 1.1 befestigt. Zwischen Rollrand 1.1 des Gehäuses 1 und Dichtbereich D2 befindet sich ein scheibenförmiges Dicht-/Sicherungselement 6. Dieses Dicht-/Sicherungselement 6 ist derart ausgebildet und angeordnet, dass eine formschlüssige Verbindung zwischen Dichtungsbalgrand D2, dem Dicht-/Sicherungselement 6 sowie dem Gehäuse 1 vorhanden ist.

Neben einer relativ einfach zu realisierenden Montage gewährleistet die erfindungsgemäße Befestigung des Dichtungsbalges ein hohes Maß an Ausreißsicherheit und Dichtheit.

## Patentansprüche

1. Kugelzapfenseitige Abdichtung eines Kugelgelenks, welches ein Gehäuse (1) zur Aufnahme einer beweglich gelagerten Kugel (2) eines Kugelzapfens (K) sowie einen zwischen dem Gehäuse (1) und dem Kugelzapfen (K) angeordneten Dichtungsbalg (3) aufweist, dessen erster Dichtungsbalgrand (D1) an dem Schaft (4) des Kugelzapfens (K) und dessen zweiter Dichtungsbalgrand (D2) an dem Gehäuse (1) abdichtend anliegt, **dadurch gekennzeichnet, dass** der an dem Schaft (4) des Kugelzapfens (K) abdichtende erste Dichtungsbalgrand (D1) an seinem nach oben offenen Ende einen radial umlaufenden, nach außen gerichteten Schenkel (3.1) aufweist, der an seiner, der Kugel (2) abgewandten Seite an einer, auf dem Schaft (4) sitzenden Scheibe (S) anliegt und dass die Scheibe (S) und der erste Dichtungsbalgrand (D1) mittels eines im Querschnitt U-förmigen Profilringes (P) miteinander verbunden sind.

2. Kugelzapfenseitige Abdichtung nach Anspruch 1, **dadurch gekennzeichnet, dass** der Schenkel (3.1) des ersten Dichtungsbalgrandes (D1) und die Scheibe (S) zumindest teilweise innerhalb einer umlaufenden, nach innen geöffneten Mulde des Profilringes (P) angeordnet sind, die durch zwei nach innen gerichtete, radial umlaufende Schenkel (P1, P2) und einen beide verbindenden, Axialschenkel (P3) des Profilringes (P) gebildet wird.

3. Kugelzapfenseitige Abdichtung nach Anspruch 1 oder 2, **dadurch gekennzeichnet, dass** die Scheibe (S) mit ihrer in Richtung zur Kugel (2) weisenden Seite an einem Anschlag (4.1) des Schaftes (4) des Kugelzapfens (K) anliegt.

4. Kugelzapfenseitige Abdichtung nach Anspruch 3, **dadurch gekennzeichnet, dass** der Anschlag (4.1) des Schaftes (4) als umlaufende Kante ausgebildet ist.

5. Kugelzapfenseitige Abdichtung nach einem der Ansprüche 1 bis 4, **dadurch gekennzeichnet, dass** der am Schenkel (3.1) des ersten Dichtungsbalgrandes (D1) anliegende Schenkel (P1) und/oder der an der Scheibe (S) anliegende Schenkel (P2) des Profilringes (P) ein durch Einrollen umgeformter Rollrand ist.

6. Kugelzapfenseitige Abdichtung nach einem der Ansprüche 1 bis 5, **dadurch gekennzeichnet, dass** die Scheibe (S) und/oder das Profilelement (P) aus nichtrostendem Stahl bestehen.

## Claims

1. A sealing of a ball joint on the side of its spherical gudgeon, comprising a housing (1) for receiving a movably held ball (2) of a spherical gudgeon (K) and a sealing bellows (3) arranged between the housing (1) and the spherical gudgeon (K) whose first sealing bellows edge (D1) rests in a sealing manner on the shaft (4) of the spherical gudgeon (K) and whose second sealing bellows edge (D2) rests in a sealing manner on the housing (1), **characterized in that** the first sealing bellows edge (D1) which seals the shaft (4) of the spherical gudgeon (K) comprises at its upwardly open end a radially circumferential leg (3.1) which faces outwardly and, on its side averted from the ball (2), rests on a disk (S) disposed on the shaft (4), and that the disk (S) and the first sealing bellows edge (D1) are mutually joined by means of a profile ring (P) which is U-shaped in its cross section.

2. A sealing on the side of the spherical gudgeon according to claim 1, **characterized in that** the leg (3.1) of the first sealing bellows edge (D1) and the disk (S) are arranged at least partly within a circumferential, inwardly opened trough of the profile ring (P), which trough is formed by two inwardly facing, radially circumferential legs (P1, P2) and an axial leg (P3) of the profile ring (P) joining the two.

3. A sealing on the side of the spherical gudgeon according to claim 1 or 2, **characterized in that** the disk (S) rests with its side facing the ball (2) on a stop (4.1) of the shaft (4) of the spherical gudgeon (K).

4. A sealing on the side of the spherical gudgeon according to claim 3, **characterized in that** the stop (4.1) of the shaft (4) is formed as a circumferential edge.

5. A sealing on the side of the spherical gudgeon according to one of the claims 1 to 4, **characterized in that** the leg (P1) resting on the leg (3.1) of the first sealing bellows edge (D1) and/or the leg (P2) of the profile ring (P) resting on the disk (S) is a welt formed by curling.

6. A sealing on the side of the spherical gudgeon according to one of the claims 1 to 5, **characterized in that** the disk (S) and/or the profile element (P) consist of stainless steel.

## Revendications

1. Joint d'étanchéité du goujon sphérique pour une articulation à rotule, comprenant un logement (1) destiné à recevoir une sphère (2) d'un goujon sphérique (K) supportée de manière mobile et un soufflet d'étanchéité (3) disposé entre le logement (1) et le goujon sphérique (K), dont le premier bord de soufflet d'étanchéité (D1) repose de manière étanche sur la tige (4) du goujon sphérique (K) et le second bord de soufflet d'étanchéité (D2) sur le logement (1), **caractérisé en ce que** le premier bord de soufflet d'étanchéité (D1) assurant l'étanchéité sur la tige (4) du goujon sphérique (K) possède à son extrémité ouverte vers le haut un bras (3.1) continu dans le sens radial et orienté vers l'extérieur, qui repose de son côté opposé à la sphère (2) sur un disque (S) reposant sur la tige (4) et **en ce que** le disque (S) et le premier bord de soufflet d'étanchéité (D1) sont reliés entre eux par l'intermédiaire d'une bague profilée (P) ayant une forme de U en section.

2. Joint d'étanchéité du goujon sphérique selon la revendication 1, **caractérisé en ce que** le bras (3.1) du premier bord de soufflet d'étanchéité (D1) et le disque (S) sont disposés au moins en partie à l'intérieur d'une auge de la bague profilée (P) continue et ouverte vers l'intérieur, qui est formée par deux bras (P1, P2) orientés vers l'intérieur et continus dans le sens radial et un bras axial (P3) de la bague profilée (P) reliant ceux-ci.

3. Joint d'étanchéité du goujon sphérique selon la revendication 1 ou 2, **caractérisé en ce que** le disque (S) repose, par son côté orienté en direction de la sphère (2), sur une butée (4.1) du corps (4) du goujon sphérique (K).

4. Joint d'étanchéité du goujon sphérique selon la revendication 3, **caractérisé en ce que** la butée (4.1) du corps (4) est conformée comme un bord continu.

5. Joint d'étanchéité du goujon sphérique selon l'une quelconque des revendications 1 à 4, **caractérisé en ce que** le bras (P1) reposant sur le bras (3.1) du premier bord de soufflet d'étanchéité (D1) et/ou le bras (P2) de la bague profilée (P) reposant sur le disque (S) sont un bord roulé mis en forme par enroulement.

6. Joint d'étanchéité du goujon sphérique selon l'une quelconque des revendications 1 à 5, **caractérisé en ce que** le disque (S) et/ou l'élément profilé (P) se composent d'acier inoxydable.
